(19) Europäisches Patentamt
European Patent Office
Office européen des brevets

(11) Veröffentlichungsnummer : **0 013 765**
**B1**

(12) # EUROPÄISCHE PATENTSCHRIFT

(45) Veröffentlichungstag der Patentschrift : **26.01.83**

(51) Int. Cl.³ : **C 09 B 62/08**, D 06 P 3/10, D 06 P 3/66

(21) Anmeldenummer : **79105410.9**

(22) Anmeldetag : **31.12.79**

(54) **Reaktivazofarbstoffe sowie deren Herstellung und Verwendung zum Färben von OH- und N-haltigen Materialien.**

(30) Priorität : **16.01.79 DE 2901546**

(43) Veröffentlichungstag der Anmeldung : **06.08.80 Patentblatt 80/16**

(45) Bekanntmachung des Hinweises auf die Patenterteilung : **26.01.83 Patentblatt 83/04**

(84) Benannte Vertragsstaaten : **CH DE FR GB**

(56) Entgegenhaltungen :
**FR A 2 297 232**
**FR A 2 299 386**
**FR A 2 370 781**
**FR A 2 372 872**

(73) Patentinhaber : **BAYER AG**
**Zentralbereich Patente, Marken und Lizenzen**
**D-5090 Leverkusen 1, Bayerwerk (DE)**

(72) Erfinder : **Henk, Hermann, Dr.**
**Roggendorfstrasse 55**
**D-5000 Köln 80 (DE)**
Erfinder : **Wunderlich, Klaus, Dr.**
**Carl-Rumpff-Strasse 21**
**D-5090 Leverkusen 1 (DE)**
Erfinder : **Wild, Peter, Dr.**
**Hainstrasse 7**
**D-6305 Alten Buseck (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

Reaktivazofarbstoffe sowie deren Herstellung und Verwendung zum Färben von OH- und N-haltigen Materialien

Gegenstand der Erfindung sind Reaktivazofarbstoffe der Formel

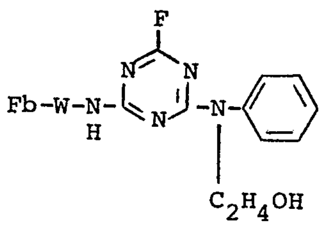

(I)

worin

Fb = Rest eines Azofarbstoffs

W = direkte Bindung oder Brückenglied, wobei W an ein C-Atom eines aromatisch carbocyclischen Rings des Chromophors Fb gebunden ist.

Besonders bevorzugt sind Reaktivazofarbstoffe gemäß obiger Formel (I), wobei Fb die dort angegebene Bedeutung hat und W für eine direkte Bindung steht und wobei die Farbstoffe in dem Teil Fb 1 bis 8 Sulfogruppen enthalten.

Aus der FR-A-2,370,781 sind Anthrachinonfarbstoffe mit charakteristischem Cyclohexylenbrückenglied und aminsubstituiertem Halogen-triazinrest und aus der FR-A-2,373,872 sind Anthrachinonfarbstoffe mit meta-Phenylenbrückenglied und gegebenenfalls aminsubstituiertem Monofluortriazinrest bekannt.

Die FR-A-2,299,386 beschreibt N-Phenylphenazin-Farbstoffe und die FR-A-2,297,232 bezieht sich auf 6,13-Dichlorphenyldioxazin-Farbstoffe.

Fb steht in der Formel I vorzugsweise für den Rest eines wasserlöslichen, insbesondere sulfonsäuregruppenhaltigen Azo-, -Farbstoffs.

Geeignete Brückenglieder W sind beispielsweise :

-$SO_2$-, -CO-, -Alkylen-CO-, -Arylen-, -Arylen-$SO_2$-, -Arylen-CO-, -Alkylen- oder -Amino-CO-, -$SO_2$-Arylen-, -$SO_2$-Alkylen-, -$SO_2$-Alkarylen-, -$SO_2$-N-Arylen-, -$SO_2$-N-Alkylen-, -$SO_2$-N-, -$SO_2$-N-Arylalkylen-,

$R_4$ $R_4$ $R_4$

wobei $R_4$ Wasserstoff, ggf. substituiertes $C_1$-$C_4$-Alkyl oder Aralkyl bedeutet und die Alkylen-, Aralkylen- und Arylengruppen weitere Substituenten tragen können.

Innerhalb der Formel (I) entspricht Fb, im folgenden als Farbstoff

$$Fb—H$$

ohne Reaktivanteil beschrieben, bevorzugt den folgenden Formeln.

1. Azofarbstoffe der Formel

$$A—N=N—B \qquad (II)$$

worin

A den Rest einer heterocyclischen oder carbocyclichen Diazokomponente, vorzugsweise aus der Benzol-, Naphthalin- oder Triazolreihe und den Rest einer heterocyclischen, carbocyclischen oder CHaciden Kupplungskomponente, insbesondere den Rest eines gegebenenfalls weiter substituierten Phenols, Naphthols, Anilins, Naphthylamins, 5-Aminopyrazols, 5-Pyrazolons, Pyridons, Aminopyridins, Acetessigsäurearylides, Indols oder Pyrimidins darstellt.

Die Substituenten W sind dabei über ein C-Atom der Diazokomponente und/oder der Kupplungskomponente mit dem Azofarbstoff verknüpft.

Besonders wertvolle Farbstoffe dieser Reihe sind solche, die wasserlösliche Gruppen, wie Sulfonsäure- oder Carboxygruppen aufweisen. Die Azofarbstoffe können metallfrei sein oder als Metallkomplexe vorliegen, wobei Kupfer-, Chrom- und Kobaltkomplexe bevorzugt sind.

Die Metallkomplex-bildenden Gruppen, vorzugsweise Hydroxy-, Carboxy- und Aminogruppen, befinden sich in Ortho-Stellung zur Azogruppe.

Die Diazokomponenten A und die Kupplungskomponenten B können beispielsweise durch die folgenden Substituenten substituiert sein :

Sulfo, Nitro, Halogen wie Fluor, Chlor und Brom, gegebenenfalls durch Chlor, $C_1$-$C_4$-Alkoxy, Hydroxy oder Cyan substituiertes $C_1$-$C_4$-Alkyl, gegebenenfalls durch $C_1$-$C_4$-Alkoxy, Hydroxy oder Cyan substituiertes $C_1$-$C_4$-Alkoxy, $C_1$-$C_4$-Alkylmercapto, $C_1$-$C_4$-Alkylsulfonyl, gegebenenfalls durch Sulfo, Amino, $C_1$-$C_4$-Alkyl, $C_1$-$C_4$-Alkoxy, Nitro oder Halogen substituiertes Phenyl oder Naphthyl, Trifluormethyl, Amino, Hydroxy, $C_1$-$C_4$-Alkyl-carbonylamino, $C_1$-$C_4$-Alkylsulfonylamino, gegebenenfalls durch Sulfo, $C_1$-$C_4$-

Alkyl, $C_1$-$C_4$-Alkoxy, Nitro oder Halogen substituiertes Benzoylamino oder Benzolsulfonylamino, gegebenenfalls im Phenylkern durch Sulfo, $C_1$-$C_4$-Alkyl, $C_1$-$C_4$-Alkoxy, Nitro oder Halogen substituiertes Phenyl-$C_1$-$C_4$-alkyl, gegebenenfalls im Phenylkern bzw. Naphthalinkern durch Hydroxy, Amino, Sulfo, $C_1$-$C_4$-Alkyl, $C_1$-$C_4$-Alkoxy, Nitro oder Halogen substituiertes Phenylazo oder Naphthylazo, $C_1$-$C_4$-Alkylcarbonyloxy, gegebenenfalls durch $C_1$-$C_4$-Alkyl, $C_1$-$C_4$-Alkoxy, Nitro oder Halogen substituiertes Benzoyloxy, Aminocarbonyl, Mono- oder Di-$C_1$-$C_4$-alkylamino, Ureido, Carboxy, Cyan, gegebenenfalls am Stickstoff durch $C_1$-$C_4$-Alkyl, Phenyl oder Benzyl substituiertes Carbonamid oder Sulfonamid, wobei Alkyl durch Sulfo- oder Sulfato und Phenyl und Benzyl durch Sulfo, $C_1$-$C_4$-Alkyl, $C_1$-$C_4$-Alkoxy, Halogen oder Nitro weiter substituiert sein können, oder $C_1$-$C_4$-Alkylsulfonylaminosulfonyl oder gegebenenfalls im Phenylkern durch Methyl, Methoxy, Chlor oder Nitro substituiertes Phenylsulfonylaminosulfonyl.

Bevorzugte Azofarbstoffe Fb—H entsprechen der Formel

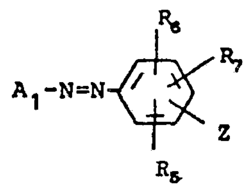

(III)

worin

$A_1$ einen Phenyl- oder Naphthylrest bedeutet, der durch Sulfo, Carboxy, Nitro, Chlor, $C_1$-$C_4$-Alkyl, $C_1$-$C_4$-Alkoxy, gegebenenfalls durch Sulfo, Amino oder $C_1$-$C_4$-Alkyl substituiertes Phenyl oder Naphthyl, Amino, Acetylamino, gegebenenfalls durch Amino, Sulfo oder $C_1$-$C_4$-Alkyl substituiertes Benzyl, gegebenenfalls durch Amino, $C_1$-$C_4$-Alkyl, Sulfo, $C_1$-$C_4$-Alkoxy oder Hydroxy substituiertes Phenylazo oder Naphthylazo oder Trifluormethyl substituiert sein kann,

Z Hydroxy, gegebenenfalls durch Hydroxy oder $C_1$-$C_4$-Alkoxy substituiertes Alkoxy oder gegebenenfalls durch $C_1$-$C_4$-Alkyl, Phenyl oder Benzyl substituiertes Amino, wobei Alkyl durch Cyan, Hydroxy oder $C_1$-$C_4$-Alkoxy und Phenyl und Benzyl durch Methyl, Methoxy, Chlor, Nitro oder Sulfo weitersubstituiert sein können,

$R_5$, $R_6$ und $R_7$ unabhängig voneinander Wasserstoff, $C_1$-$C_4$-Alkyl, $C_1$-$C_4$-Alkoxy, Amino, $C_1$-$C_4$-Alkylcarbonylamino, gegebenenfalls durch $C_1$-$C_4$-Alkyl substituiertes Phenyl, Amino, Hydroxy oder Sulfo bedeuten.

Weiterhin bevorzugte Azofarbstoffe entsprechen der Formel

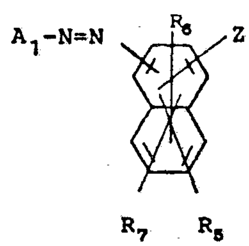

(IV)

worin

$A_1$, $R_5$, $R_6$, $R_7$ und Z die oben genannte Bedeutung besitzen.

Weiter bevorzugte Azofarbstoffe entsprechen der Formel

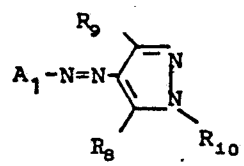

(V)

worin

$A_1$ die oben genannte Bedeutung besitzt,

$R_8$ Amino oder Hydroxy,

$R_9$ $C_1$-$C_4$-Alkyl, vorzugsweise Methyl oder Carboxy und

$R_{10}$ gegebenenfalls durch Chlor, $C_1$-$C_4$-Alkyl, Sulfo, $C_1$-$C_4$-Alkoxy oder Amino substituiertes Phenyl oder Naphthyl bedeuten.

Eine weitere bevorzugte Gruppe von Azoverbindungen entspricht der Formel

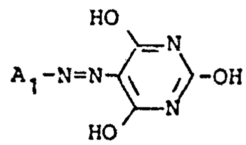

(VI)

worin

$A_1$ die vorstehend genannte Bedeutung hat.

Ebenfalls besonders wertvoll sind Farbstoffe der Formel

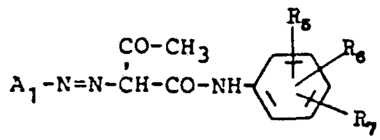

(VII)

worin

$A_1$, $R_5$, $R_6$ und $R_7$ die vorstehend genannte Bedeutung haben.

Ebenfalls bevorzugt sind Azofarbstoffe der Formel

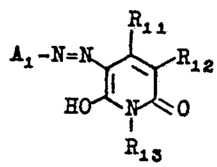

(VIII)

worin

$R_{11}$ $C_1$-$C_4$-Alkyl, Aryl, Carboxy, Hydroxy,

$R_{12}$ Cyan, Carboxy, Sulfo, Sulfo-$C_1$-$C_4$-alkyl oder Aminocarbonyl,

$R_{13}$ Wasserstoff, $C_1$-$C_4$-Alkyl, Aryl oder Aralkyl bedeutet und

$A_1$ die vorstehend genannte Bedeutung hat,

und der Formel

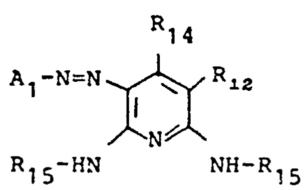

(IX)

worin

$R_{12}$ und $A_1$ die vorstehend genannte Bedeutung haben,

$R_{14}$ $C_1$-$C_4$-Alkyl oder Amino und

$R_{15}$ Wasserstoff oder $C_1$-$C_4$-Alkyl bedeuten.

Bevorzugte Farbstoffe innerhalb der Formeln (III) bis (IX) sind solche, in denen $A_1$ den Rest eines Amins der Formel

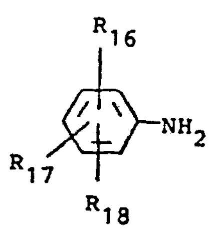

(X)

worin

$R_{16}$ Wasserstoff, Sulfo, Hydroxy, Carboxy oder Amino,

$R_{17}$ Wasserstoff, Chlor, Nitro, Aminosulfonyl, $C_1$-$C_4$-Alkyl, $C_1$-$C_4$-Alkoxy, Amino, Sulfo, Hydroxy oder gegebenenfalls im Phenyl- oder Naphthylkern durch Hydroxy, Sulfo oder Amino substituiertes Phenyl- oder Naphthylazo, und

$R_{18}$ Wasserstoff, Chlor, Nitro, $C_1$-$C_4$-Alkyl oder $C_1$-$C_4$-Alkoxy bedeuten,

und der Formeln

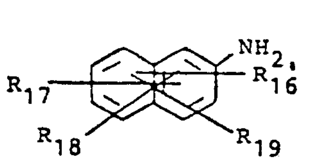 oder 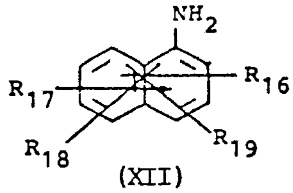

(XI) (XII)

darstellt, worin

$R_{16}$, $R_{17}$ und $R_{18}$ die vorstehend genannten Bedeutungen haben und

$R_{19}$ Wasserstoff, Chlor, Nitro, Aminosulfonyl, $C_1$-$C_4$-Alkyl, $C_1$-$C_4$-Alkoxy, Amino, Sulfo, Hydroxy oder gegebenenfalls im Phenyl- oder Naphthylkern durch Hydroxy, Sulfo oder Amino substituiertes Phenylazo oder Naphthylazo bedeutet.

Die erfindungsgemäßen Farbstoffe werden dadurch erhalten, daß man 2,4,6-Trifluor-1,3,5-triazin mit Farbstoffen oder Farbstoffvorprodukten — die mindestens eine Amino- oder Amid-Gruppe mit mindestens einem reaktionsfähigen Wasserstoffatom enthalten — und mit N-β-hydroxyethylanilin in beliebiger Reihenfolge umsetzt.

Vorzugsweise werden amino- oder amidgruppenhaltige Farbstoffe oder Farbstoffvorprodukte zuerst mit 2,4,6-Trifluor-1,3,5-triazin umgesetzt und dann mit N-β-Hydroxyethylamin kondensiert.

Man arbeitet dabei je nach Art der verwendeten Ausgangsverbindungen in organischem, organischwässrigen oder wässrigem Medium bei tiefen Temperaturen, vorzugsweise in Gegenwart alkalischer Kondensationsmittel wie Pyridin, wässrigem Alkalicarbonat-, -hydrogencarbonat- oder -hydroxid-Lösungen.

Im Falle von Farbstoffvorprodukten werden diese nach der Umsetzung mit 2,4,6-Trifluor-1,3,5-triazin in geeigneter Weise in die gewünschten Azofarbstoffe überführt, beispielsweise durch Diazotieren und Kuppeln.

Die nach den vorstehend beschriebenen Verfahren erhältlichen Farbstoffe können weiteren für Farbstoffe üblichen Umsetzungen unterzogen werden, beispielsweise in dem man metallisierbare Farbstoffe mit metallabgebenden Mitteln, insbesondere mit Chrom-, Kobalt-, Kupfer- oder Nickelsalzen behandelt. Farbstoffe, die reduzierbare Gruppen, insbesondere Nitrogruppen, aufweisen, können reduziert, Farbstoffe, die acylierbare Gruppen, insbesondere acylierbare Aminogruppen aufweisen, acyliert werden.

Vorzugsweise setzt man amid- oder aminogruppen-haltige Farbstoffe der Formel

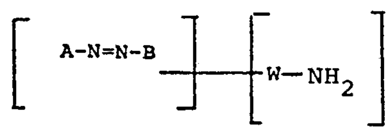 (XVI)

worin

A, B, W die genannte Bedeutung besitzen, mit 2,4,6-Trifluor-1,3,6-triazin und mit N-β-Hydroxyethyl-anilin nach dem oben beschriebenen Verfahren um.

Die neuen Farbstoffe sind wertvolle Produkte, die sich für verschiedenste Anwendungszwecke eignen. Als wasserlösliche Verbindungen finden sie bevorzugtes Interesse für das Färben und Bedrucken hydroxylgruppenhaltiger und stickstoffhaltiger Textilmaterialien, insbesondere von Textilmaterialien, insbesondere von Textilmaterialien aus nativer und regenerierter Cellulose, ferner aus Wolle, Seide synthetischen Polyamid- und Polyurethanfasern. Sie zeichnen sich durch eine überraschend hohe Fixierausbeute aus.

Die Produkte eignen sich besonders gut als Reaktivfarbstoffe zum Färben von Cellulosematerialien nach den hierfür bekannten Techniken.

Zum Färben von Cellulose werden die Farbstoffe vorzugsweise in einer wäßrigen Lösung eingesetzt, die mit alkalisch reagierenden Stoffen, wie Alkalihydroxyd oder Alkalicarbonat, oder mit in alkalisch reagierende Stoffe übergehenden Verbindungen, wie Alkalibicarbonat, versetzt werden kann. Der Lösung können weitere Hilfsmittel zugesetzt werden, die jedoch mit den Farbstoffen nicht in unerwünschter Weise reagieren sollen. Solche Zusätze sind beispielsweise oberflächenaktive Substanzen, wie Alkylsulfate oder die Wanderung des Farbstoffes verhindernde Stoffe oder Färberei-Hilfsprodukte, wie Harnstoff (zur Verbesserung der Löslichkeit und der Fixierung der Farbstoffe), oder indifferente Verdickungsmittel, wie Öl-Wasser-Emulsionen, Traganth, Stärke, Alginat oder Methylcellulose.

Die so hergestellten Lösungen oder Pasten werden auf das zu färbende Material, beispielsweise durch Aufklotzen im Foulard (kurze Flotte) oder durch Aufdrucken aufgebracht und anschließend einige Zeit auf erhöhte Temperatur, vorzugsweise 40 bis 150 °C, erhitzt. Das Erhitzen kann in der Hotflue, im Dämpfapparat, auf erhitzten Walzen oder durch Einbringen in erhitzte konzentrierte Salzbäder sowohl für sich allein als auch in beliebiger Reihenfolge hintereinander ausgeführt werden.

Bei Verwendung einer Klotz- oder Färbeflotte ohne Alkali wird eine Passage der trockenen Ware durch eine alkalisch reagierende Lösung, der Kochsalz oder Glaubersalz zugesetzt wird, angeschlossen. Der Salzzusatz vermindert hierbei das Abwandern des Farbstoffs von der Faser.

Man kann ebenfalls das zu färbende Material mit einem der vorgenannten säurebindenden Mittel vorbehandeln, anschließend mit der Lösung oder Paste des Farbstoffes behandeln und schließlich, wie angegeben, bei erhöhter Temperatur fixieren.

Zum Färben aus langer Flotte geht man in eine wäßrige Lösung des Farbstoffs (Flottenverhältnis 1 : 5 bis 1 : 40) bei Raumtemperatur ein und färbt 40 bis 90 Minuten, gegebenenfalls unter Erhöhung der Temperatur bis auf 85 °C, unter anteilweiser Zugabe von Salz, z.B. Natriumsulfat, und anschließend Alkali, beispielsweise Natriumphosphaten, Natriumcarbonat oder Alkalien. Hierbei tritt die chemische Reaktion zwischen Farbstoff und Faser ein. Nach erfolgter chemischer Fixierung wird das Färbegut heiß gespült und abschließend geseift, wobei nicht fixierte Reste des Farbstoffs entfernt werden. Man erhält ausgezeichnet echte, insbesondere naß- und lichtechte Färbungen.

Im sogenannten Klotz-Kaltverweil-Verfahren läßt sich eine nachträgliche Erhitzung des geklotzten Gewebes dadurch ersparen, daß man das Gewebe einige Zeit, z.B. 20 bis 40 Stunden, bei Raumtemperatur lagert. In diesem Verfahren wird ein stärkeres Alkali als bei dem oben beschriebenen Färbeverfahren aus langer Flotte eingesetzt.

Zum Bedrucken von Hydroxylgruppen enthaltenden Materialien wird eine Druckpaste aus der Farbstofflösung, einem Verdickungsmittel, wie Natriumalginat und einer alkalisch reagierenden oder beim Erhitzen Alkali abspaltenden Verbindung, wie Natriumcarbonat, Natriumphosphat, Kaliumcarbonat, Kaliumacetat oder Natrium- und Kaliumbicarbonat, verwendet und das bedruckte Material gespült und geseift.

Enthalten die Farbstoffe metallkomplexbildende Gruppierungen, so können die Färbungen und Drucke vielfach durch Nachbehandeln mit metallabgebenden Mitteln, wie Kupfersalzen, z.B. Kupfersulfat, Chrom-, Kobalt- und Nickelsalzen, wie Chromacetat, Kobaltsulfat oder Nickelsulfat, in ihren Echtheiten verbessert werden.

Amidgruppen enthaltende Textilmaterialien, wie Wolle, Seide, synthetische Polyamid- und Polyurethanfasern, werden im allgemeinen nach den hierfür üblichen Färbemethoden in saurem bis neutralem Bereich gefärbt, wobei zuweilen eine abschließende Erhöhung des pH-Wertes des Färbebades, z.B. auf pH 6,5 bis pH 8,5 von Vorteil ist.

Die Farbstoffe werden beispielsweise auf synthetischem Polyamidgewebe als Lösungen oder bevorzugt in dispergierter Form aufgebracht und anschließend, gegebenenfalls zusammen mit (vorzugsweise geringeren Mengen) säurebindenden Mitteln, wie Natriumcarbonat, nachbehandelt. Besonders günstige Resultate werden mit solchen Farbstoffen erzielt, die nicht oder nur schwer in Wasser löslich sind. Diese werden nach an sich üblichen Techniken und unter Zusatz der bekannten Hilfsmittel zu einer Farbstoffdispersion verarbeitet und als solche im Färbe- und/oder Klotzbad oder in einer Druckpaste angewendet. Die für diese Anwendung geeigneten Hilfsmittel sind u.a. Verbindungen, die die Wanderung des Farbstoffs auf der Faser verhindern, wie Celluloseäther, Alkalimetallchloride und -sulfate, Benetzungsmittel, wie Kondensationsprodukte aus Äthylenoxid und Fettalkoholen bzw. Phenolen, sulfonierte Fettalkohole, Lösungsmittel, wie Thiodiglykol, ferner Verdickungsmittel, wie Stärke, Traganth, Alginatverdickung, Gummiarabikum usw.

Die Nachbehandlung der auf Polyamidfasergewebe erhaltenen Färbungen, Imprägnierungen und Drucke erfolgt vorzugsweise bei einer Temperatur von 50-110 °C und mit einer Dauer von 5 bis 60 Minuten. Auch hier können die Färbungen für den Fall, daß die verwendeten Farbstoffe metallkomplexbildende Gruppierungen enthalten, mit metallabgebenden Mitteln, wie Kupfersalzen, z.B. Kupfersulfat oder Chrom-, Kobalt- und Nickelsalzen, wie Chromacetat, Kobaltsulfat oder Nickelsulfat, zuweilen in ihren Echtheiten verbessert werden.

Die mit den neuen Farbstoffen erhältlichen Färbungen zeichnen sich im allgemeinen durch gute bis sehr gute Echtheitseigenschaften, insbesondere durch vorzügliche Naßechtheiten aus.

## Beispiel 1

16 g 1-(2',5'-Dichlor-4'-sulfophenyl)-3-methyl-4-(5''-amino-2''-sulfophenylazo)-5-pyrazolon werden in 300 ml Wasser gelöst. Man stellt einen pH-Wert von 4,0 ein und kühlt auf 0-5° ab. 3,0 ml Cyanurfluorid werden innerhalb von 5 Minuten zu der Lösung zugetropft. Gleichzeitig hält man den pH-Wert mittels 20 %iger Sodalösung auf 3,5-4,0. Man rührt 15 Minuten nach. Anschließend setzt man zu der Lösung 4,5 g N-(2-Hydroxyäthyl)-anilin und stellt dann den pH-Wert zügig auf 6,5. Bei diesem Wert wird das Gemisch gehalten. Bei zweistündigem Nachrühren läßt man die Temperatur auf 20° ansteigen. Man salzt den teilweise ausgefallenen Farbstoff mit 30 g Natriumchlorid vollends aus, saugt ihn ab, wäscht ihn mit 10 %iger Natriumchloridlösung und trocknet ihn bei 40° im Vakuum. Als freie Säure entspricht der Farbstoff der Formel

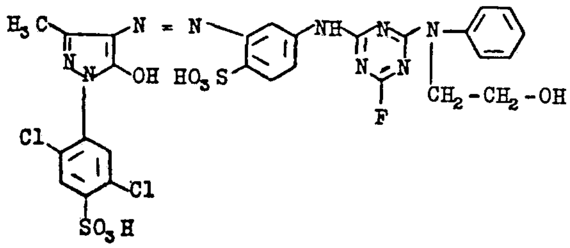

und färbt Baumwolle aus langer Flotte bei 40° in klaren grünstichig gelben Tönen mit guten Licht- und Naßechtheiten.

Ersetzt man in Beispiel 1 die 2,4-Diaminobenzolsulfonsäure, das 1-(2',5'-Dichlor-4'-sulfophenyl)-methyl-5-pyrazolon durch die in der Tabelle angegebenen Diazo- und Kupplungskomponenten, so erhält man weitere wertvolle Farbstoffe mit den angegebenen Farbtönen.

(Siehe die Tabelle, Seiten 8 und 9)

| Bsp. Nr. | Diazokomponente | Kupplungskomponente | Farbton auf Baumwolle |
|---|---|---|---|
| 2 | 2,4-Diaminobenzolsulfonsäure | 5-Amino-3-methyl-1-(2'-methyl-4'-sulfophenyl)-pyrazol | gelb |
| 3 | " | 5-Amino-3-phenyl-1-(2'-methoxy-5'-sulfophenyl)-pyrazol | gelb |
| 4 | 2,5-Diaminobenzolsulfonsäure | " | gelb |
| 5 | 2,4-Diaminobenzolsulfonsäure | 1-(β-Carboxyäthyl)-5-pyrazolon-3-carbonsäure | grünst. gelb |
| 6 | " | 1-(β-Cyanäthyl)-5-pyrazolon-3-carbonsäure | grünst. gelb |
| 7 | " | 6-Hydroxy-1,4-dimethyl-3-sulfomethyl-2-pyridon | grünst. gelb |
| 8 | " | 4,6-Dihydroxy-1-methyl-3-(N-methylaminocarbonyl)-2-pyridon | gelb |
| 9 | " | 1-Naphthol-4,7-disulfonsäure | orange rot |
| 10 | 2,5-Diaminobenzolsulfonsäure | 2,4-Diamino-5-cyano-6-(3'-sulfophenyl)-pyridin | gelb |
| 11 | 2,4-Diamino-5-chlorbenzolsulfonsäure | (4-Amino-3,5-disulfophenyl)-acetoacetanilid | grünst. gelb |
| 12 | 2,4-Diaminobenzolsulfonsäure | 6-Ureido-1-naphthol-3-sulfonsäure | orange |
| 13 | " | 7-(4'-sulfophenylamino)-1-naphthol-3-sulfonsäure | braun |

| Bsp. Nr. | Diazokomponente | Kupplungskomponente | Farbton auf Baumwolle |
|---|---|---|---|
| 14 | 2,4-Diaminobenzolsulfonsäure | 8-Acetylamino-1-naphthol-3,6-disulfonsäure | rot |
| 15 | 2,5-Diaminobenzolsulfonsäure | 1-(4'-Sulfophenyl)-3-carboxy-5-pyrazolon | rotst. gelb |
| 16 | " | Barbitursäure | grünst. gelb |
| 17 | " | 7-Phenylamino-1-naphthol-3,6-disulfonsäure | braun |
| 18 | 2,4-Diamino-5-methoxybenzol-sulfonsäure | " | braun-rot |
| 19 | 2,5-Diaminobenzolsulfonsäure | 7-Amino-1-naphthol-3-sulfon-säure (sauer gekuppelt) | rot |
| 20 | " | 7-Methylamino-1-naphthol-3-sulfonsäure (sauer gekuppelt) | rot |
| 21 | " | 7-Amino-1-naphthol-4-sulfon-säure (sauer gekuppelt) | rot-violett |
| 22 | " | 5-(2'-Sulfophenylazo)-6-phenyl-amino-1-naphthol-3-sulfon-säure | rot |

Beispiel 23

16,0 g 1-Amino-8-hydroxynaphthalin-3,6-disulfonsäure werden in 200 ml Wasser durch Einstellen eines pH-Wertes von 5,5 mit 20 %iger Sodalösung gelöst. Man kühlt die Lösung auf 0-5° ab und läßt dann innerhalb von 5 Minuten 4,6 ml Cyanurfluorid zutropfen. Während des Eintropfens hält man den pH-Wert mit 20 %iger Sodalösung auf 4,0-4,5 und rührt anschließend noch 10 Minuten bei pH 4,5 nach. Man setzt nun 7,1 g N-(2-Hydroxyäthyl)-anilin zu der Lösung und hält den pH-Wert bei 6,5-7,0. Nach 2-3-stündigem Nachrühren ist die Kondensation beendet.

8,7 g 2-Aminobenzolsulfonsäure werden in 100 ml Wasser unter Neutralisation gelöst. Man kühlt die Lösung auf 0-5° ab, setzt 10 ml konz. Salzsäure zu und diazotiert durch Zutropfen von 25 ml 2 n Natriumnitritlösung. Nach halbstündigem Nachrühren wird evt. überschüssiges Nitrit mit Amidosulfonsäure beseitigt.

Man gibt nun bei 0-5° die Diazoverbindung zur oben hergestellten Lösung der reaktiven Kupplungskomponente und hält im Kupplungsgemisch den pH-Wert mit 20 %iger Sodalösung auf 7,0-7,5. Man rührt 1 Stunde nach und läßt dann die Temperatur auf 20° ansteigen. Der pH-Wert wird auf 6,5 gestellt, der Farbstoff aus der Lösung mit 150 g Natriumchlorid ausgesalzen, abgesaugt, mit 25 %iger Natriumchloridlösung gewaschen und bei 40° im Vakuum getrocknet.

Der Farbstoff, der in Form der freien Säure der Formel

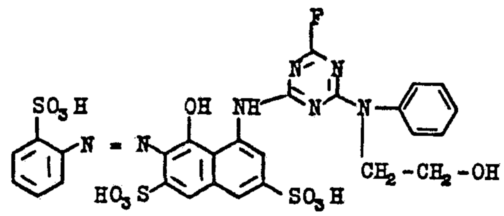

entspricht, färbt Baumwolle aus langer Flotte in blaustichig roten Tönen mit guten Echtheitseigenschaften.

Beispiel 24

28,5 g Dinatriumsalz der 6-Amino-1-hydroxy-2-(2'-sulfophenylazo)-naphthalin-3-sulfonsäure werden in 900 ml Wasser gelöst. Zu der auf 0-5° abgekühlten Lösung läßt man in 15 Minuten 6,0 ml Cyanurfluorid zutropfen und hält den pH-Wert mit 20 %iger Sodalösung auf 5,0-5,5. Man rührt 15 Minuten nach und läßt dann 9,3 g N-(2-Hydroxyäthyl)-anilin zutropfen. Dann wird der pH-Wert in den Grenzen von 6,5-7,0 gehalten. Anschließend rührt man zwei Stunden nach und läßt dabei die Temperatur auf 20° ansteigen, wobei obliger pH-Wert weiter gehalten wird. Anschließend wird der Farbstoff mit 180 g Natriumchlorid ausgesalzen, abgesaugt und mit 10 %iger Natriumchloridlösung gewaschen. Er wird dann bei 40° im Vakuum getrocknet.

Das Produkt — in Form der freien Säure — der Formel

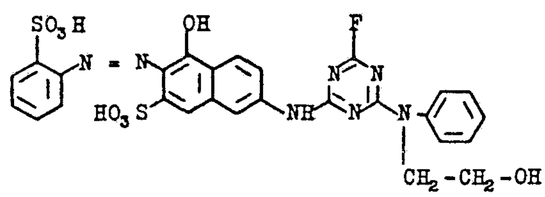

färbt Baumwolle aus langer Flotte in gelbstichigen Orangetönen mit guten Licht- und Naßechtheiten.

Vergleichbare Farbstoffe erhält man, wenn man 2-Aminobenzolsulfonsäure und 6-Amino-1-naphthol-3-sulfonsäure durch die in der folgenden Tabelle angegebenen Diazo- und Kupplungskomponenten ersetzt.

(Siehe die Tabellen, Seiten 11, 12, 13)

| Bsp. Nr. | Diazokomponente | Kupplungskomponente | Farbton auf Baumwolle |
|---|---|---|---|
| 25 | 4-Aminobenzol-1,3-disulfonsäure | 3-Methyl-1-[6-amino-4,8-disulfonaphthyl-(2)]-5-pyrazolon | gelb |
| 26 | 2-Aminonaphthalin-4,8-disulfonsäure | 3-Methylanilin | gelb |
| 27 | 2-Aminonaphthalin-4,6,8-trisulfonsäure | " | gelb |
| 28 | 2-Aminonaphthalin-6,8-disulfonsäure | 3-Aminoacetanilid | gelb |
| 29 | 2-Aminonaphthalin-3,6,8-trisulfonsäure | " | gelb |
| 30 | 4-Aminobenzol-1,3-disulfonsäure | 3-Aminophenylharnstoff | gelb |
| 31 | 2-Aminobenzol-1,4-disulfonsäure | " | gelb |
| 32 | 1-Amino-4-(2',5'-disulfophenylazo)-naphthalin-6-sulfonsäure | " | rotst. braun |
| 33 | 2-Aminonaphthalin-3,6,8-trisulfonsäure | 3-Aminophenylharnstoff | gelb |
| 34 | 2-Amino-5-(4'-sulfophenylazo)-benzolsulfonsäure | 6-Amino-1-naphthol-3-sulfonsäure | blaust. rot |
| 35 | 2-Amino-1-sulfomehtylnaphthalin-5-sulfonsäure | " | rot |

| Bsp. Nr. | Diazokomponente | Kupplungskomponente | Farbton auf Baumwolle |
|---|---|---|---|
| 36 | 2-Amino-5-methoxy-benzolsulfonsäure | 6-Amino-1-naphthol-3-sulfonsäure | scharlach |
| 37 | 2-Aminonaphthalin-1,5-disulfonsäure | " | orange |
| 38 | 2-Aminonaphthalin-3,6-disulfonsäure | " | orange |
| 39 | 2-Amino-5-(4'-sulfophenyl-azo)-benzolsulfonsäure | 1-Aminonaphthalin-6-sulfonsäure | gelb-braun |
| 40 | 1-Amino-4-(2',5'-disulfo-phenylazo)-naphthalin-6-sulfonsäure | 1-Aminonaphthalin-7-sulfonsäure | rot-braun |
| 41 | 2,5-Dimethoxy-4-(2,5-di-sulfophenylazo)-anilin | 3-Äthylaminophenylharnstoff | braun |
| 42 | 1-Amino-4-[4',8'-disulfo-naphthylazo(2)]-naphthalin-7-sulfonsäure | 1-Aminonaphthalin-6,8-disulfonsäure | braun |
| 43 | 1-Amino-4-[4',8'-disulfo-naphthylazo(2)]-naphthalin-6-sulfonsäure | 1-Aminonaphthalin-8-sulfonsäure | braun-rot |
| 44 | Anilin | 8-Amino-1-naphthol-3,6-disulfonsäure | blaust. rot |
| 45 | 2-Amino-5-methylbenzol-sulfonsäure | " | rot |

| Bsp. Nr. | Diazokomponente | Kupplungskomponente | Farbton auf Baumwolle |
|---|---|---|---|
| 46 | 2-Aminonaphthalin-1-sulfonsäure | 8-Amino-1-naphthol-3,6-disulfonsäure | bordorot |
| 47 | 2-Aminonaphthalin-1,5-disulfonsäure | " | rot |
| 48 | 2-Aminonaphthalin-1,5-disulfonsäure | 8-Amino-1-naphthol-3,5-disulfonsäure | rot |
| 49 | 2-Amino-1-sulfomethylnaphthalin-5-sulfonsäure | " | rubin |
| 50 | 2-Methoxy-4-(2'-sulfophenylazo)-5-methylanilin | 8-Amino-1-naphthol-3,6-disulfonsäure | blau |
| 51 | 1-Amino-4-[4',6',8'-trisulfonaphthylazo(2)]-naphthalin-6-sulfonsäure | 3-Methylanilin | braun |

Beispiel 52

137,7 g des Kupferkomplexazofarbstoffes, aus dem Diazoniumsalz der 2-Amino-5-sulfobenzolcarbonsäure durch Kuppeln mit 3-Methyl-1-[6'-amino-4',8'-disulfonaphthyl(2)]-5-pyrazolon und Kupferung in acetatgepufferter Lösung mit Kupfer (II)-sulfat-Lösung gewonnen, werden in 3,5 l Wasser bei pH 5 gelöst und auf 0° abgekühlt. Innerhalb 15 Minuten setzt man 20 ml Cyanurfluorid zu, hält pH und Temperatur konstant und rührt anschließend noch 15 Minuten nach. Man gibt nun 31 g N-(2-Hydroxyäthyl)-anilin zu, hält den pH-Wert bei 6,5-7,0 und läßt die Temperatur auf ca. 20 °C ansteigen. Nach 2-3-stündigem Nachrühren ist die Kondensation beendet. Man salzt bei Raumtemperatur aus, saugt ab und trocknet.

Der Farbstoff, der in Form der freien Säure der Formel

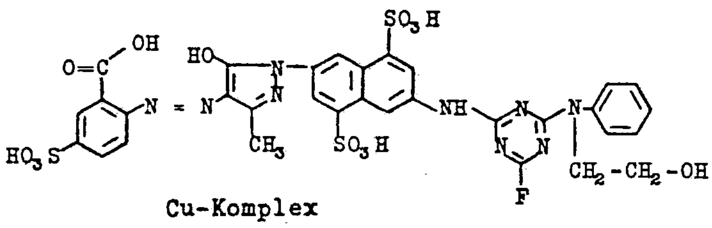

Cu-Komplex

entspricht, färbt Baumwolle und Zellwolle in sehr lichtechten und waschfestem Gelb.

Beispiel 53

18,9 g 2-Aminophenol-4-sulfonsäure werden diazotiert und bei pH 8 auf 31,9 g 8-Amino-1-naphthol-3,5-disulfonsäure gekuppelt. Nach der Kupplung wird bei pH 5 mit 16 g Kupfersulfat 1 Stunde lang auf 90 °C erwärmt. Der Kupferkomplexfarbstoff wird ausgesalzen und abgesaugt. Die feuchte Paste löst man in 600 ml Wasser und kondensiert bei pH 4,0-4,5 und 0 °C zunächst mit 10 ml Cyanurfluorid und danach bei pH 7 und Raumtemperatur mit 15,5 g N-(2-Hydroxyäthyl)-anilin jeweils unter Zuhilfenahme von 20 %iger Sodalösung. Man salzt aus, saugt ab und trocknet in Vakuum.

Zellulosefasern werden von diesen Farbstoffen blau-violett gefärbt.

In Form der freien Säure entspricht er der Formel

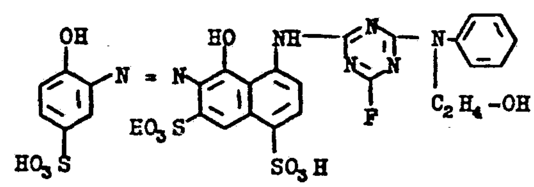

Cu-Komplex

Weitere Kupferkomplex-Reaktivfarbstoffe werden erhalten, wenn man anstelle der 2-Aminophenol-4-sulfonsäure und 8-Amino-1-naphthol-3,5-disulfonsäure die in der folgenden Tabelle aufgeführten Diazo- und Kupplungskomponenten verwendet.

(Siehe die Tabelle, Seite 15)

| Bsp. Nr. | Diazokomponente | Kupplungskomponente | Farbton auf Baumwolle |
|---|---|---|---|
| 54 | 2-Amino-5-sulfobenzoesäure | 6-Amino-1-naphthol-3-sulfonsäure | braunrot |
| 55 | 1-Amino-2-naphthol-4-sulfonsäure | 6-Amino-1-naphthol-4,8-disulfonsäure | marineblau |
| 56 | 2-Aminonaphthalin-4,8-disulfonsäure (oxidativ gekupfert) | 8-Amino-1-naphthol-3,6-disulfonsäure | rotst. blau |
| 57 | 2-Aminonaphthalin-6,8-disulfonsäure (oxydativ gekupfert) | 6-Amino-1-naphthol-4,8-disulfonsäure | marineblau |
| 58 | 2-Amino-6-nitronaphthalin-4,8-disulfonsäure (oxidativ gekupfert) | 6-Amino-1-naphthol-3-sulfonsäure | blau |
| 59 | 2,4-Diaminophenol | 8-Amino-1-naphthol-5,7-disulfonsäure | blaust. violett |
| 60 | 6-Nitro-1-diazo-2-naphthol-4-sulfonsäure (reduziert) | " | blau |
| 61 | 2,4-Diaminophenol-6-sulfonsäure | " | blau |
| 62 | 4-(2-Sulfophenylazo)-2-methoxy-5-methylanilin | 6-Amino-1-naphthol-3,5-disulfonsäure | blau |
| 63 | 2,5-Diaminobenzolsulfonsäure | 4-(2'-Hydroxy-5-sulfophenylazo)-resorcin | braun |

Beispiel 64

Man löst 109 g des aus dem Diazoniumsalz von 8-Amino-1-phenyl-sulfonyl-oxynaphthalin-3,6-disulfonsäure durch Kuppeln bei pH 8 auf 6-Acetyl-amino-1-naphthol-4,8-disulfonsäure, oxydativer Kupferung mit Kupfersulfat und Wasserstoffperoxyd und Hydrolyse der N-Acetyl und O-Phenylsulfonylgruppen erhaltenen Kupferkomplexazofarbstoffs bei pH 5,5-6,0 in 4 l Wasser, und Konsensiert nacheinander mit 14 ml Cyanurfluorid bei pH 6 und 0 °C und mit 21,7 g N-(2-Hydroxyäthyl)-anilin bei pH 7 und Raumtemperatur. Der Farbstoff entspricht in Form der freien Säure der Formel

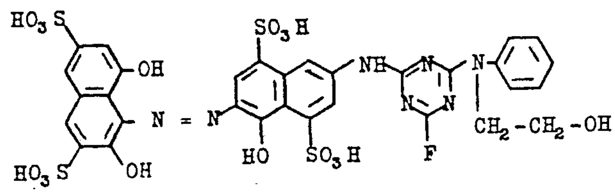

Cu-Komplex

und färbt Baumwolle und Zellwolle blau.

Beispiel 65

Ersetzt man in Beispiel 64 8-Amino-1-phenylsulfonyloxynaphthalin-3,6-disulfonsäure durch die äquivalente Menge 8-Amino-l-phenylsulfonyloxynaphthalin-3,5-disulfonsäure so erhält man einen Farbstoff, der Baumwolle und Zellwolle in sehr echten grünst. Blautönen färbt.

Beispiel 66

18,9 g diazotierte 2-Aminophenol-4-sulfonsäure werden auf 64,7 g des aus dem Diazoniumsalz der 6-Amino-1-naphtol-4,8-disulfonsäure durch Kuppeln auf 6-Amino-1-naphthol-3-sulfonsäure und nachfolgender oxydativer Kupferung erhaltenen Kupferkomplexazofarbstoff gekuppelt. Nach Aussalzen und Absaugen wird die feuchte Farbstoffpaste in 1,8 l Wasser gelöst, mit 25 g Kupfersulfat bei pH 5 und 50 °C in einer Stunde ein zweites Mal gekupfert und erneut isoliert. In 1,9 l Wasser wird die Farbstoffpaste angerührt und zunächst mit 10 ml Cyanurfluorid bei pH 5 und 0 °C und danach mit 15,5 g N-(2-Hydroxyäthyl)-anilin bei pH 7 und Raumtemperatur kondensiert.

Der Farbstoff, der in Form der freien Säure der Formel

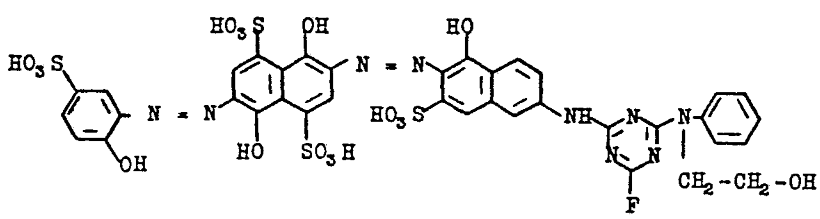

Cu-Komplex

entspricht, färbt Baumwolle und Zellwolle blau.

Beispiel 67

47,4 g des durch Kuppeln des Diazoniumsalzes von 2-Amino-4,6-dinitrophenol auf 2-Aminonaphthalin 6-sulfonsäure und anschließendes Kobaltieren mit Kobaltsulfatheptahydrat bei pH 5 und Raumtemperatur erhaltenen 1 : 1-Komplexes werden in 1 250 ml Wasser bei pH 11 und 45 °C mit 55,4 g des durch Kuppeln des Diazoniumsalzes der 2-Amino-4-nitrophenol-6-sulfonsäure auf 6-Amino-l-naphthol-3-sulfonsäure erhaltenen Azofarbstoffs, zum 1 : 2-Kobaltkomplex umgesetzt. Diese Reaktion dauert ca. 2,5 Stunden. Danach wird mit Kochsalz ausgesalzen und abgesaugt.

Die Paste wird in 1,5 l Wasser suspendiert und zunächst mit 10 ml Cyanurfluorid bei pH 5 und 0 °C und danach mit 15,5 g N-(2-Hydroxyäthyl)-anilin bei pH 7 und Raumtemperatur kondensiert.

Danach wird ausgesalzen, abgesaugt und im Vakuum getrocknet. Der so hergestellte unsymmetrische 1 : 2-Kobaltkomplex färbt Baumwolle und Zellwolle in dunkelbraunen Tönen. In Form der freien Säure entspricht er der Formel

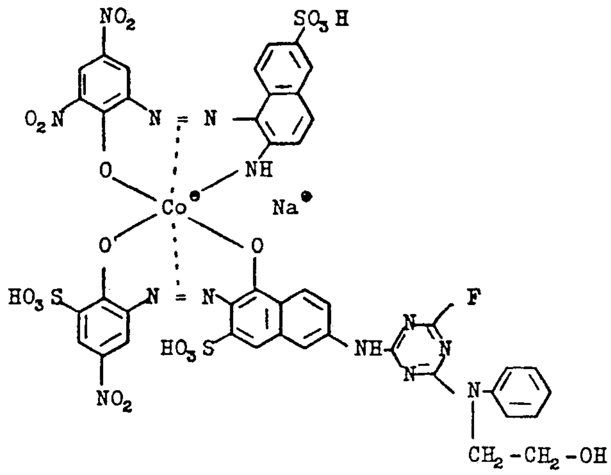

Symmetrische 1 : 2-Kobaltkomplexazofarbstoffe werden erhalten, wenn man die in der folgenden Tabelle genannten Diazo- und Kupplungs-Komponenten verwendet.

| Bsp. Nr. | Diazokomponente | Kupplungskomponente | Farbton auf Baumwolle |
|---|---|---|---|
| 68 | 2-Aminophenol-4-sulfonsäure | Acetessigsäure-(4-aminoanilid) | gelb |
| 69 | 2-Amino-4-nitrophenol-6-sulfonsäure | 4-Aminophenol | braun |
| 70 | " | 3-Amino-2-naphthol-5,7-disulfonsäure | rotst. braun |
| 71 | 2-Amino-4-nitrophenol | 8-Amino-1-naphthol-3,6-disulfonsäure | grau |
| 72 | 6-Nitro-1-diazo-2-naphthol-4-sulfonsäure | 6-Amino-1-naphthol-3-sulfonsäure | grau |

Beispiel 73

Ersetzt man in Beispiel 67 den metallfreien Azofarbstoff durch die äquivalente Menge des durch Kuppeln bei pH 8 aus dem Diazoniumsalz des 2-Amino-4,6-dichlorphenol auf 8-Amino-l-naphthol-3,6-disulfonsäure hergestellten Azofarbstoffs, so erhält man einen Farbstoff, der Baumwolle und Zellwolle marineblau färbt. In Form der freien Säure entspricht er der Formel

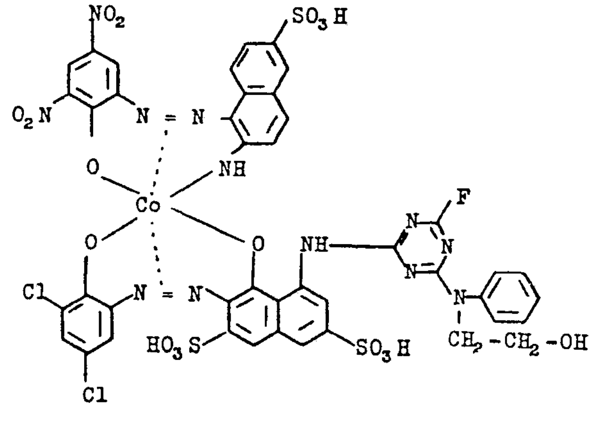

Beispiel 74

77,8 g des aus 2-Amino-6-nitrophenol-4-sulfonsäure und 2-Naphthol durch Diazotieren und Kuppeln hergestellten Farbstoffs werden in 500 ml Wasser bei 80 °C angerührt.

In diese Suspension trägt man bei pH 8 l Stunde den 1 : 1-Chromkomplex ein, dem man durch Diazotieren von 44,7 g 2-Amino-4-chlorphenol-6-sulfonsäure, Kuppeln bei pH 8 auf 72,6 g 8-Amino-l-naphthol-3,5-disulfonsäure, Chromieren mit 32 g Chromtrichlorid in saurer Lösung, Aussalzen und Absaugen erhält.

Der unsymmetrische 1 : 2-Chromkomplexazofarbstoff wird zwischenisoliert mit 20 ml Cyanurfluorid bei pH 5 und 0 °C und mit 31 g N-(2-Hydroxyäthyl)-anilin bei pH 7 und 25 °C kondensiert. Man salzt aus, saugt ab und trocknet. Der Farbstoff, der in Form der freien Säure der Formel

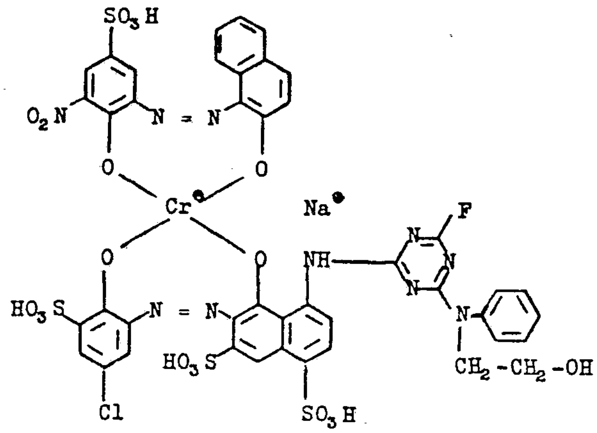

entspricht, färbt Baumwolle und Zellwolle blau-grau.

Beispiel 75

Ersetzt man im Beispiel 74 2-Amino-4-chlorphenol-6-sulfonsäure durch die entsprechende Menge 2-Amino-4-nitrophenol-6-sulfonsäure, so erhält man einen unsymmetrischen 1 : 2-Chromkomplexfarbstoff mit dem sich Cellulosematerialien in blau-grauen Tönen färben oder bedrucken läßt. Symmetrische 1 : 2-Chromkomplexazofarbstoffe werden gewonnen, wenn man die in der folgenden Tabelle angegebenen Diazo- und Kupplungskomponenten gemäß der Vorschrift von Beispiel 74 einsetzt, mit Cyanurfluorid und zum Schluß mit N-(2-Hydroxyäthyl)-anilin kondensiert.

| Bsp. Nr. | Diazokomponente | Kupplungskomponente | Farbton auf Baumwolle |
|---|---|---|---|
| 76 | 2-Aminobenzoesäure | 6-Amino-1-naphthol-3-sulfonsäure | braun |
| 77 | " | 6-Amino-1-naphthol-3,5-disulfon-säure | braun |
| 78 | 2-Amino-4-chlor-phenol | 8-Amino-1-naphthol-3,6-disulfon-säure | blaugrau |
| 79 | " | 8-Amino-1-naphthol-3,5-disulfon-säure | blaugrau |
| 80 | 2-Amino-4-nitrophenol | " | blaugrau |
| 81 | 2-Amino-5-nitrophenol | " | blaugrau |
| 82 | " | 8-Amino-1-naphthol-3,6-disulfon-säure | blaugrau |
| 83 | 2-Amino-4-nitrophenol | " | blaugrau |
| 84 | 6-Nitro-1-diazo-2-naph-thol-4-sulfonsäure | 6-Amino-1-naphthol-3-sulfonsäure | grau |

Beispiel 85

Ersetzt man in Beispiel 74 8-Amino-l-naphthol-3,5-disulfonsäure durch die äquivalente Menge von 8-Amino-l-naphthol-3,6-disulfonsäure, so erhält man einen Farbstoff, mit dem man Baumwolle und Zellwolle blaugrau anfärben oder bedrucken kann.

Weitere hervorragende graue bis schwarze Farbstoffe werden durch Mischung von Kobalt- mit Chromkomplexfarbstoffen gewonnen, beispielsweise durch Mischung von Beispiel 84 mit Beispiel 72 sowie Beispiel 83 mit Beispiel 71, wobei das Mischungsverhältnis zwischen 30 : 70 und 70 : 30 variieren kann.

**Ansprüche**

1. Reaktivfarbstoffe der Formel

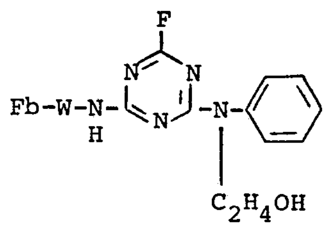

worin

Fb = Rest eines Azofarbstoffs

W = direkte Bindung oder Brückenglied, wobei W an ein C-Atom eines aromatisch carbocyclischen Ringes des Chromophors Fb gebunden ist.

2. Reaktivfarbstoffe gemäß Anspruch 1, dadurch gekennzeichnet, daß W für eine direkte Bindung steht, wobei die Farbstoffe in dem Teil Fb 1-8 Sulfogruppen enthalten.

3. Verwendung der Farbstoffe gemäß Anspruch 1-2 zum Färben und Bedrucken von hydroxygruppen- und stickstoffhaltigen Materialien, insbesondere Fasermaterialien.

**Claims**

1. Reactive dyestuffs of the formula

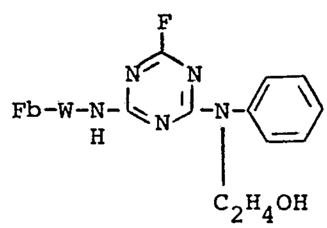

wherein

Fb = the radical of an azo dyestuff,

W = a direct bond or bridge member, W being bonded to a C atom of an aromatic carbocyclic ring of the chromophor Fb.

2. Reactive dyestuffs according to Claim 1, characterised in that W represents a direct bond, the dyestuffs in the Fb part containing 1-8 sulpho groups.

3. Use of the dyestuffs according to Claims 1-2 for dyeing and printing materials, especially fibre materials, containing hydroxyl groups or nitrogen.

**Revendications**

1. Des colorants réactifs de formule

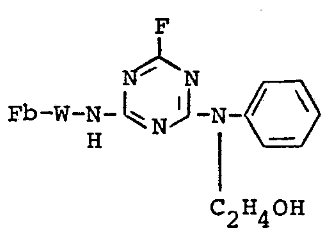

dans laquelle

Fb = reste d'un colorant azoïque

W = liaison directe ou pont, W étant lié à un atome de carbone d'un noyau carbocyclique aromatique du chromophore Fb.

2. Colorants réactifs suivant la revendication 1, caractérisés en ce que W est une liaison directe, les colorants renfermant 1-8 groupes sulfo dans la partie Fb.

3. Utilisation des colorants suivant les revendications 1-2 pour la teinture et l'impression de matières contenant des groupes hydroxy et de l'azote, notamment des matières fibreuses.